# FASCICULE DE BREVET EUROPEEN

(11) **EP 1 089 903 B1**
(45) Date de publication et mention de la délivrance du brevet: **18.09.2002**
(21) Numéro de dépôt: 99923689.6
(22) Date de dépôt: 08.06.1999
(51) Int. Cl.: B60T 13/14, B60T 8/40

(54) **CAPACITE HYDRAULIQUE A ABSORPTION CONTROLEE EN PRESSION**
HYDRAULISCHE KAPAZITÄT MIT DRUCKABHÄNGIG GESTEUERTEM AUFNAHMEVERMÖGEN
HYDRAULIC CAPACITY WITH CONTROLLED PRESSURE ABSORPTION

(30) Priorité: 26.06.1998 FR 9808101
(43) Date de publication de la demande: 11.04.2001
(73) Titulaire: Bosch Systemes de Freinage, 93700 Drancy (FR)
(72) Inventeur: PASQUET, Thierry, F-93190 Livry Gargan (FR); DELAGE, Jean-Pierre, F-94160 Saint Mandé (FR); FOURCADE, Jean, F-93260 Les Lilas (FR)
(74) Mandataire: Hurwic, Aleksander Wiktor
(86) Numéro de dépôt international: FR9901344
(87) Numéro de publication internationale: WO00000373

(56) Documents cités:
- DE-A- 19 544 221
- DE-A- 19 743 006

## Description

La présente invention concerne une capacité hydraulique, par exemple utilisable comme accumulateur à pression variable dans un circuit de freinage.

Plus précisément, la présente invention concerne une capacité hydraulique, comprenant un corps creux allongé suivant un axe, et une enveloppe rigide, le corps creux étant réalisé dans un matériau supportant une expansion élastique, à partir d'un état de repos, au moins suivant une direction radiale par rapport à l'axe, le corps creux étant défini au repos par une paroi d'épaisseur comprise entre une épaisseur minimale et une épaisseur maximale, cette paroi étant bordée par un orifice fixe par rapport à l'enveloppe rigide, l'enveloppe rigide entourant le corps creux pour en limiter l'expansion, et cette capacité étant destinée à contenir à chaque instant un volume instantané de fluide susceptible d'évoluer entre un volume minimum et un volume maximum, cette capacité appliquant au volume instantané de fluide une pression instantanée dépendant du volume instantané.

Une capacité hydraulique de ce type est connue et par exemple décrite et illustrée dans le document de brevet WO 98/00320.

En réalité, ce document de brevet s'inscrit dans un art antérieur beaucoup plus large, qui comprend notamment aussi les brevets US 3 948 288 ou US 5 718 488, et qui vise à réaliser un amortisseur de variations de pression.

L'invention se situe dans un contexte très différent, et vise à réaliser une capacité utilisable comme un accumulateur hydraulique propre à appliquer au fluide qu'il contient une pression liée, par une loi prédéterminée, au volume de fluide accumulé, un tel accumulateur pouvant servir de simulateur d'actionnement de frein, du type de ceux que décrivent par exemple les documents de brevets FR - 2 753 949 et FR - 2 756 797.

US-A-5 682 923 décrit une capacité hydraulique munie d'un corps creux en matériau élastique ondulé, d'épaisseur variable, enfermé dans une enveloppe rigide.

A cette fin, la capacité hydraulique de l'invention, par ailleurs conforme à la définition qu'en donne le préambule ci-dessus, est essentiellement caractérisée en ce que la paroi du corps creux, au moins pour le volume minimum de fluide, est simultanément en contact avec l'enveloppe au moins par une première et une seconde zone de cette paroi, distantes de l'orifice, présentant des première et seconde épaisseurs respectives, et entre les premières et seconde zones, il existe une troisième zone distante de l'enveloppe et présentant une troisième épaisseur différente des première et seconde épaisseurs.

Pour suivre avec une précision optimale la loi prédéterminée devant lier la pression du fluide stocké au volume de ce dernier, il peut être utile de donner aux première et seconde épaisseurs des valeurs différentes l'une de l'autre.

Dans un mode de réalisation possible de l'invention, le corps creux présente une surface interne essentiellement cylindrique au repos.

La paroi peut en outre atteindre son épaisseur minimale à une extrémité du corps creux, opposée à l'orifice, et présenter à cette extrémité une surface externe inscrite, au repos, dans un cylindre de premier diamètre.

Dans ce cas, il est possible de prévoir que l'enveloppe, en regard de l'extrémité du corps creux, forme un cylindre de second diamètre, supérieur au premier diamètre.

Enfin, la paroi peut atteindre son épaisseur maximale en une pluralité de zones intermédiaires situées axialement entre l'orifice et l'extrémité du corps creux, et dans lesquelles la paroi présente une surface externe inscrite, au repos, dans un cylindre de troisième diamètre, supérieur au second diamètre

D'autres caractéristiques et avantages de l'invention ressortiront clairement de la description qui en est faite ci-après, à titre indicatif et nullement limitatif, en référence aux dessins annexés, dans lesquels:
- La Figure 1 est un vue en coupe d'une capacité conforme à l'invention; et
- La Figure 2 est un diagramme illustrant une loi d'évolution de la pression d'un fluide stocké dans la capacité de la Figure 1 en fonction du volume de ce fluide.

L'invention concerne une capacité, hydraulique, comprenant essentiellement un corps creux 2, de forme allongée suivant un axe 1, et une enveloppe rigide 3 entourant le corps creux 2.

La paroi 21 du corps creux est, au voisinage de l'orifice d'entrée-sortie 22 de ce dernier, dotée d'une gorge 221 qui est montée sur une nervure 41 formée à la périphérie interne d'une bague de maintien 4.

La bague 4 est elle-même interposée entre l'enveloppe rigide 3 et un raccord hydraulique 5 qui débouche dans l'orifice 22 du corps creux, ce raccord étant fixé à l'enveloppe rigide 3 au moyen de vis 6, et la bague 4 étant immobilisée suivant l'axe 1 par appui sur des épaulements respectifs 31, 51 de l'enveloppe et du raccord.

Un capot 7 peut éventuellement être prévu sur l'enveloppe rigide 3 pour la protéger de la pollution ambiante.

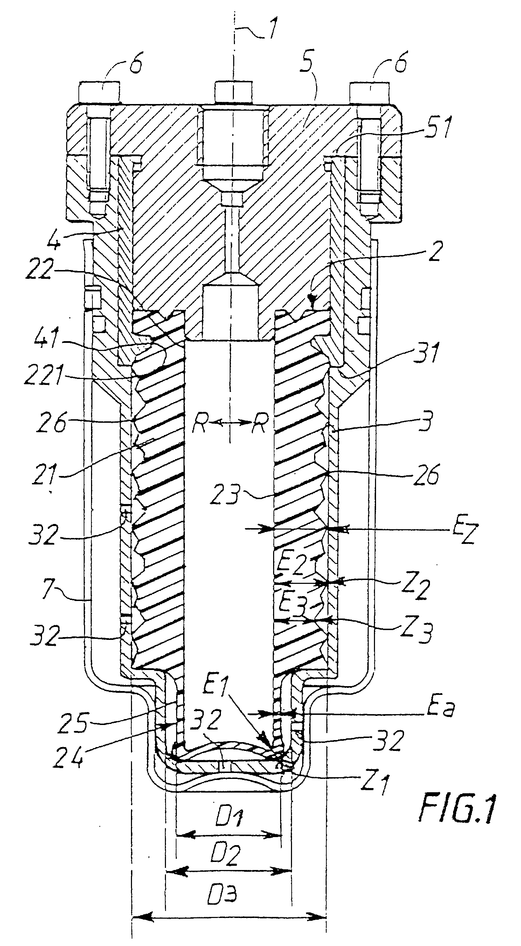

Le corps creux 2 est réalisé dans un matériau élastomère, par exemple du caoutchouc, pour pouvoir subir sans dommage une expansion élastique suivant une direction radiale R, et éventuellement aussi suivant la direction de l'axe 1, à partir d'un état de repos qui est celui qu'illustre la figure 1, l'expansion du corps creux 2 se trouvant bloquée lorsque la paroi 21 est intégralement en contact avec l'enveloppe rigide 3.

La paroi 21 du corps creux 2 présente, au repos, une épaisseur comprise entre une épaisseur minimale Ea et une épaisseur maximale Ez.

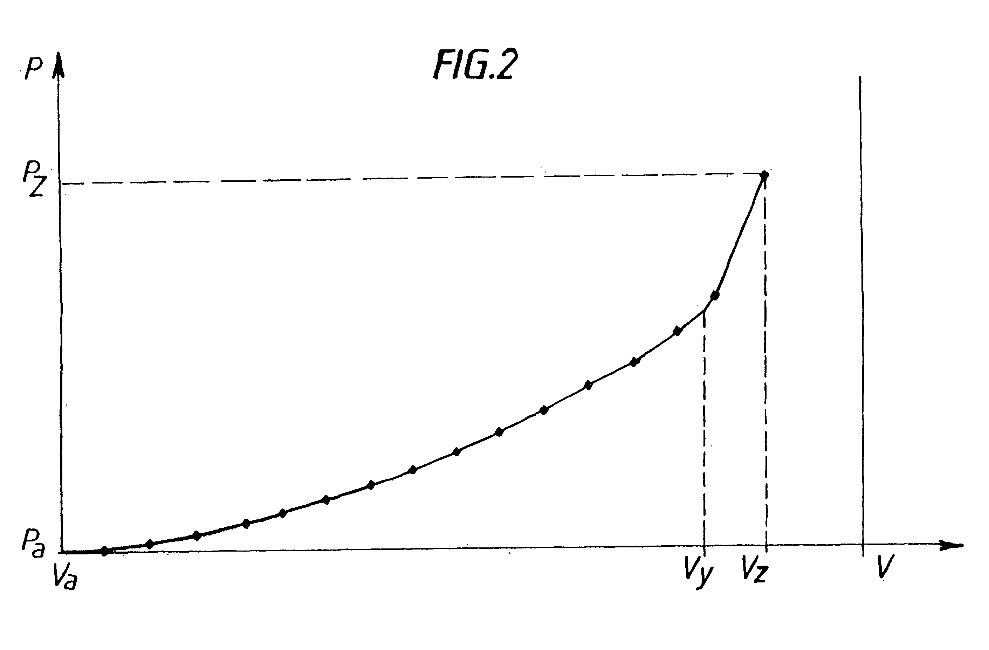

La capacité ainsi constituée est destinée à contenir à chaque instant un volume instantané V de fluide susceptible d'évoluer entre un volume minimum Va et un volume maximum Vz (figure 2), la paroi élastique 21 permettant, selon la présente invention, d'appliquer au volume instantané V de fluide une pression instantanée P qui dépend du volume instantané V selon une loi prédéterminée, telle que celle qu'illustre la figure 2.

Selon l'invention, la paroi 21 est simultanément en contact avec l'enveloppe 3 par au moins des première et seconde zones Z1, Z2 de cette paroi, et ceci au moins pour un volume instantané donné de fluide, la figure 1 représentant en l'occurrence le cas où ce volume est égal à Va et où le corps creux est dans son état de repos.

Ces première et seconde zones Z1, Z2, qui sont distantes de l'orifice 22, présentent des première et seconde épaisseurs respectives E1, E2, et sont séparées l'une de l'autre par une troisième zone Z3, cette troisième zone étant elle-même distante de l'enveloppe 3 et présentant une troisième épaisseur E3 différente des première et seconde épaisseurs E1, E2.

En réalité, il peut être utile de conformer la paroi 21, soit par essais successifs et interpolation, soit plus facilement par les méthodes traditionnelles de simulation informatique, de manière que des zones telles que Z1, Z2, et Z3 répondant aux conditions précédemment décrites apparaissent pour une pluralité de valeurs différentes du volume instantané de fluide, pour permettre à la capacité de l'invention de suivre d'aussi près que possible la loi prédéfinie devant lier la pression instantanée P au volume instantané V, telle qu'illustrée à la figure 2.

Comme le montre la figure 1, des valeurs différentes peuvent en outre être attribuées aux épaisseurs respectives E1, E2 des première et seconde zones Z1, Z2, de manière à augmenter le nombre de paramètres permettant de faire varier l'absorption de la capacité pour l'adapter à la loi prédéfinie par laquelle on cherche à lier la pression instantanée P au volume instantané V.

Dans l'exemple illustré à la figure 1, le corps creux 2 présente une surface interne 23 essentiellement cylindrique au repos, la paroi 21 atteignant son épaisseur minimale Ea à une extrémité 24 du corps creux 2, opposée à l'orifice 22, et présentant à cette extrémité 24 une surface externe 25 inscrite, au repos, dans un cylindre de premier diamètre D1.

L'enveloppe 3, en regard de l'extrémité 24 du corps creux 2, forme alors un cylindre de second diamètre D2, supérieur au premier diamètre D1.

Enfin, la paroi 21, dans l'exemple illustré, atteint son épaisseur maximale Ez en une pluralité de zones intermédiaires 26 situées axialement entre l'orifice 22 et l'extrémité 24 du corps creux 2, et dans lesquelles la paroi 21 présente une surface externe inscrite, au repos, dans un cylindre de troisième diamètre D3, supérieur au second diamètre D2.

Dans tous les cas, des ouvertures 32 peuvent être pratiquées dans l'enveloppe rigide 3 pour permettre l'échappement de l'air piégé entre le corps creux 2 et cette enveloppe 3.

Le principe de fonctionnement de la capacité illustrée est le suivant.

De façon générale, lorsqu'un certain volume de fluide hydraulique est injecté dans le corps creux 2, l'expansion de ce dernier se produit prioritairement dans les zones de la paroi 21 qui, à la fois, ne sont pas en contact avec l'enveloppe rigide 3, et présentent la plus faible épaisseur.

Et par ailleurs, la résistance qu'oppose le corps creux à son expansion, exprimée en terme d'augmentation de la pression instantanée P pour un accroissement donné du volume instantané V, est une fonction croissante de l'épaisseur de la paroi 21 dans la zone où ce corps creux subit son expansion, et une fonction décroissante de la surface de la zone qui subit l'expansion.

Pour les faibles valeurs du volume instantané de fluide V, c'est-à-dire pour les valeurs de ce volume qui sont peu supérieures au volume minimum Va contenu dans le corps creux au repos, tout accroissement de ce volume provoque donc l'expansion radiale et axiale de l'extrémité 24 du corps creux 2, dont l'épaisseur est minimale, et la résistance qu'oppose le corps creux à son expansion est relativement faible.

Dans ces conditions, tout accroissement du volume instantané V, aux faibles valeurs de ce dernier, est associé à un faible accroissement de la pression instantanée P.

Au fur et à mesure que le volume instantané V augmente, la surface de l'extrémité 24 qui se trouve en contact avec l'enveloppe rigide 3 augmente, de sorte que la surface de l'extrémité 24 qui peut encore être le siège d'une expansion diminue, ce qui provoque une augmentation des incréments de la pression instantanée P pour des incréments constants du volume instantané V.

Cette situation se traduit, sur la figure 2, par le fait que la courbe représentant la pression P en fonction du volume V présente une concavité tournée vers le haut.

Lorsque le volume V atteint une valeur Vy, l'extrémité 24 du corps creux se trouve intégralement plaquée contre l'enveloppe rigide 3, le corps creux ne pouvant plus subir d'expansion que dans sa partie supérieure.

Comme cette dernière présente une épaisseur supérieure à celle de l'extrémité 24, la pression P varie plus rapidement pour un même accroissement de volume que pour les volumes inférieurs à Vy, cette variation dépendant de la distribution des zones d'épaisseurs telles que E2, E3, Ez, conformément aux principes précédemment énoncés.

## Revendications

1. Capacité hydraulique, comprenant un corps creux (2) allongé suivant un axe (1), et une enveloppe rigide (3), le corps creux (2) étant réalisé dans un matériau supportant une expansion élastique, à partir d'un état de repos, au moins suivant une direction radiale (R) par rapport à l'axe (1), le corps creux (2) étant défini au repos par une paroi (21) d'épaisseur comprise entre une épaisseur minimale (Ea) et une épaisseur maximale (Ez), cette paroi étant munie d'un orifice (22) fixe par rapport à l'enveloppe rigide (3), l'enveloppe rigide (3) entourant le corps creux (2) pour en limiter l'expansion, et cette capacité étant destinée à contenir à chaque instant un volume instantané (V) de fluide susceptible d'évoluer entre un volume minimum (Va) et un volume maximum (Vz), cette capacité appliquant au volume instantané (V) de fluide une pression instantanée (P) dépendant du volume instantané (V), **caractérisée en ce que** la paroi (21), au moins pour le volume minimum (Va) de fluide, est simultanément en contact avec l'enveloppe (3) au moins par une première (Z1) et une seconde zone (Z2) de cette paroi, distantes de l'orifice (22), présentant des première et seconde épaisseurs respectives (E1, E2), et entre les première et seconde zones, il existe une troisième zone (Z3) distante de l'enveloppe (3) et présentant une troisième épaisseur (E3) différente des première et seconde épaisseurs (E1, E2).

2. Capacité hydraulique suivant la revendication 1, **caractérisée en ce que** les première et seconde épaisseurs (E1, E2) sont différentes l'une de l'autre.

3. Capacité hydraulique suivant la revendication 1 ou 2, **caractérisée en ce que** le corps creux (2) présente une surface interné (23) essentiellement cylindrique au repos.

4. Capacité hydraulique suivant la revendication 3, **caractérisée en ce que** la paroi (21) atteint son épaisseur minimale (Ea) à une extrémité (24) du corps creux (2), opposée à l'orifice (22), et présente à cette extrémité (24) une surface externe (25) inscrite, au repos, dans un cylindre de premier diamètre (D1).

5. Capacité hydraulique suivant la revendication 4, **caractérisée en ce que** l'enveloppe (3), en regard de l'extrémité (24) du corps creux (2), forme un cylindre de second diamètre (D2), supérieur au premier diamètre (D1).

6. Capacité hydraulique suivant la revendication 4 ou 5, **caractérisée en ce que** la paroi (21) atteint son épaisseur maximale (Ez) en une pluralité de zones intermédiaires (26) situées axialement entre l'orifice (22) et l'extrémité (24) du corps creux (2), et dans lesquelles la paroi (21) présente une surface externe inscrite, au repos, dans un cylindre de troisième diamètre (D3), supérieur au second diamètre (D2).

7. Capacité hydraulique, comprenant un corps creux (2) allongé suivant un axe (1), et une enveloppe rigide (3), le corps creux (2) étant réalisé dans un matériau supportant une expansion élastique, à partir d'un état de repos, au moins suivant une direction radiale (R) par rapport à l'axe (1), le corps creux (2) étant défini au repos par une paroi (21) d'épaisseur comprise entre une épaisseur minimale (Ea) et une épaisseur maximale (Ez), cette paroi étant munie d'un orifice (22) fixe par rapport à l'enveloppe rigide (3), l'enveloppe rigide (3) entourant le corps creux (2) pour en limiter l'expansion, et cette capacité étant destinée à contenir à chaque instant un volume instantané (V) de fluide susceptible d'évoluer entre un volume minimum (Va) et un volume maximum (Vz), cette capacité appliquant au volume instantané (V) de fluide une pression instantanée (P) dépendant du volume instantané (V), **caractérisée en ce que** la paroi (21), au moins pour le volume minimum (Va) de fluide, est simultanément en contact avec l'enveloppe (3) au moins par une première (Z1) et une seconde zone (Z2) de cette paroi, distantes de l'orifice (22), présentant des première et seconde épaisseurs respectives (E1, E2), et entre les première et seconde zones, il existe une troisième zone (Z3) distante de l'enveloppe (3) et présentant une troisième épaisseur (E3) différente des première et seconde épaisseurs (E1, E2) et **en ce que** la courbe représentant la pression (P) en fonction en volume (V) présente une concavité tournée vers le haut.

## Patentansprüche

1. Hydraulikspeicher mit einem hohlen, entlang einer Achse (1) langgestreckten Körper (2) und einem starren Gehäuse (3), wobei der hohle Körper (2) aus einem Material besteht, das eine elastische Aufweitung ausgehend von einem Ruhezustand wenigstens entlang einer zur Achse (1) radialen Richtung (R) unterstützt, wobei der hohle Körper (2) im Ruhezustand durch eine Wand (21) definiert ist, deren Dicke zwischen einer minimalen Dicke (Ea) und einer maximalen Dicke (Ez) enthalten ist, wobei die Wand mit einer Öffnung (22) versehen ist, die bezüglich des starren Gehäuses (3) fest ist, wobei das starre Gehäuse (3) den hohlen Körper (2) umgibt, um dessen Aufweitung zu begrenzen, und wobei der Speicher dafür vorgesehen ist, zu jedem Zeitpunkt ein momentanes Volumen (V) von Fluid zu enthalten, das zwischen einem minimalen Volumen (Va) und einem maximalen Volumen (Vz) bewegt werden kann, wobei der Speicher an das momentane Volumen (V) von Fluid einen momentanen Druck (P) anlegt, der vom momentanen Volumen (V) abhängt, **dadurch gekennzeichnet, daß** die Wand (21) wenigstens beim minimalen Volumen (Va) von Fluid das Gehäuse (3) gleichzeitig in wenigstens einer ersten Zone (Z1) und einer zweiten Zone (Z2) der Wand berührt, die von der Öffnung (22) entfernt sind und eine erste bzw. eine zweite Dicke (E1 bzw. E2) aufweisen, und daß zwischen der ersten und der zweiten Zone eine dritte Zone (Z3) existiert, die vom Gehäuse (3) entfernt ist und eine dritte Dicke (E3) aufweist, die sich von der ersten und der zweiten Dicke (E1, E2) unterscheidet.

2. Hydraulikspeicher nach Anspruch 1, **dadurch gekennzeichnet, daß** die erste und die zweite Dicke (E1, E2) sich voneinander unterscheiden.

3. Hydraulikspeicher nach Anspruch 1 oder Anspruch 2, **dadurch gekennzeichnet, daß** der hohle Körper (2) eine Innenfläche (23) aufweist, die im Ruhezustand im wesentlichen zylindrisch ist.

4. Hydraulikspeicher nach Anspruch 3, **dadurch gekennzeichnet, daß** die Wand (21) ihre minimale Dicke (Ea) an einem Ende (24) des hohlen Körpers (2) erreicht, das der Öffnung (22) gegenüberliegt, und an diesem Ende (24) eine Außenfläche (25) aufweist, die im Ruhezustand in einen Zylinder eines ersten Durchmessers (D1) eingeschrieben ist.

5. Hydraulikspeicher nach Anspruch 4, **dadurch gekennzeichnet, daß** das Gehäuse (3) gegenüber dem Ende (24) des hohlen Körpers (2) einen Zylinder mit einem zweiten Durchmesser (D2) bildet, der größer als der erste Durchmesser (D1) ist.

6. Hydraulikspeicher nach Anpruch 4 oder Anspruch 5, **dadurch gekennzeichnet, daß** die Wand (21) ihre maximale Dicke (Ez) in einer Mehrzahl von Zwischenzonen (26) erreicht, die axial zwischen der Öffnung (22) und dem Ende (24) des hohlen Körpers (2) angeordnet sind, und in denen die Wand (21) eine Außenfläche aufweist, die in der Ruhestellung in einen Zylinder mit einem dritten Durchmesser (D3) eingeschrieben ist, der größer als der zweite Durchmesser (D2) ist.

7. Hydraulikspeicher mit einem hohlen, entlang einer Achse (1) langgestreckten Körper (2) und einem starren Gehäuse (3), wobei der hohle Körper (2) aus einem Material besteht, das eine elastische Aufweitung ausgehend von einem Ruhezustand wenigstens entlang einer zur Achse (1) radialen Richtung (R) unterstützt, wobei der hohle Körper (2) im Ruhezustand durch eine Wand (21) definiert ist, deren Dicke zwischen einer minimalen Dicke (Ea) und einer maximalen Dicke (Ez) enthalten ist, wobei die Wand mit einer Öffnung (22) versehen ist, die bezüglich des starren Gehäuses (3) fest ist, wobei das starre Gehäuse (3) den hohlen Körper (2) umgibt, um dessen Aufweitung zu begrenzen, und wobei der Speicher dafür vorgesehen ist, zu jedem Zeitpunkt ein momentanes Volumen (V) von Fluid zu enthalten, das zwischen einem minimalen Volumen (Va) und einem maximalen Volumen (Vz) bewegt werden kann, wobei der Speicher an das momentane Volumen (V) von Fluid einen momentanen Druck (P) anlegt, der vom momentanen Volumen (V) abhängt, **dadurch gekennzeichnet, daß** die Wand (21) wenigstens beim minimalen Volumen (Va) von Fluid das Gehäuse (3) gleichzeitig in wenigstens einer ersten Zone (Z1) und einer zweiten Zone (Z2) der Wand berührt, die von der Öffnung (22) entfernt sind und eine erste bzw. eine zweite Dicke (E1 bzw. E2) aufweisen, daß zwischen der ersten und der zweiten Zone eine dritte Zone (Z3) existiert, die vom Gehäuse (3) entfernt ist und eine dritte Dicke (E3) aufweist, die sich von der ersten und der zweiten Dicke (E1, E2) unterscheidet, und daß die Kurve, die den Druck (P) in Abhängigkeit vom Volumen (V) angibt, eine nach oben gerichtete Konkavität aufweist.

## Claims

1. Hydraulic capacity comprising a hollow body (2) which is elongate along an axis (1) and a rigid casing (3), the hollow body (2) being made of a material that can withstand elastic expansion from a state of rest, at least in a radial direction (R) with respect to the axis (1), the hollow body (2) being defined, at rest, by a wall (21) the thickness of which is between a minimum thickness (Ea) and a maximum thickness (Ez), this wall being equipped with an orifice (22) which is stationary with respect to the rigid casing (3), the rigid casing (3) surrounding the hollow body (2) in order to limit its expansion, and this capacity being intended to contain, at every instant, an instantaneous volume (V) of fluid which can change between a minimum volume (Va) and a maximum volume (Vz), this capacity applying to the instantaneous volume (V) of fluid an instantaneous pressure (P) that depends on the instantaneous volume (V), **characterized in that** the wall (21), at least for the minimum volume (Va) of fluid, is simultaneously in contact with the casing (3) at least via a first zone (Z1) and a second zone (Z2) of this wall, which zones are distant from the orifice (22), having first and second respective thicknesses (E1, E2) and between the first zone and the second zone there is a third zone (Z3) distant from the casing (3) and having a third thickness (E3) different from the first and second thicknesses (E1, E2).

2. Hydraulic capacity according to Claim 1, **characterized in that** the first and second thicknesses (E1, E2) are different from each other.

3. Hydraulic capacity according to Claim 1 or 2, **characterized in that** the hollow body (2) has an internal surface (23) which is essentially cylindrical at rest.

4. Hydraulic capacity according to Claim 3, **characterized in that** the wall (21) reaches its minimum thickness (Ea) at one end (24) of the hollow body (2), this being the opposite end to the orifice (22), and at this end (24) has an external surface (25) which at rest, lies inside a cylinder of a first diameter (D1).

5. Hydraulic capacity according to Claim 4, **characterized in that** the casing (3), opposite the end (24) of the hollow body (2) forms a cylinder of a second diameter (D2), greater than the first diameter (D1).

6. Hydraulic capacity according to Claim 4 or 5, **characterized in that** the wall (21) reaches its maximum thickness (Ez) at a number of intermediate zones (26) lying axially between the orifice (22) and the end (24) of the hollow body (2), and in which zones the wall (21) has an external surface which, at rest, lies inside a cylinder of a third diameter (D3), greater than the second diameter (D2).

7. Hydraulic capacity comprising a hollow body (2) which is elongate along an axis (1) and a rigid casing (3), the hollow body (2) being made of a material that can withstand elastic expansion from a state of rest, at least in a radial direction (R) with respect to the axis (1), the hollow body (2) being defined, at rest, by a wall (21) the thickness of which is between a minimum thickness (Ea) and a maximum thickness (Ez), this wall being equipped with an orifice (22) which is stationary with respect to the rigid casing (3), the rigid casing (3) surrounding the hollow body (2) in order to limit its expansion, and this capacity being intended to contain, at every instant, an instantaneous volume (V) of fluid which can change between a minimum volume (Va) and a maximum volume (Vz), this capacity applying to the instantaneous volume (V) of fluid an instantaneous pressure (P) that depends on the instantaneous volume (V), **characterized in that** the wall (21), at least for the minimum volume (Va) of fluid, is simultaneously in contact with the casing (3) at least via a first zone (Z1) and a second zone (Z2) of this wall, which zones are distant from the orifice (22), having first and second respective thicknesses (E1, E2) and between the first zone and the second zone there is a third zone (Z3) distant from the casing (3) and having a third thickness (E3) different from the first and second thicknesses (E1, E2), and **in that** the curve representing the pressure (P) as a function of volume (V) has a concave side facing upward.
